(19) Europäisches Patentamt
European Patent Office
Office européen des brevets

(11) **EP 2 071 453 A1**

(12) **EUROPEAN PATENT APPLICATION**

(43) Date of publication:
**17.06.2009 Bulletin 2009/25**

(51) Int Cl.:
***G06F 9/445*** *(2006.01)*

(21) Application number: **07123229.2**

(22) Date of filing: **14.12.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(71) Applicant: **ITI Scotland Limited
Glasgow G2 2LB (GB)**

(72) Inventors:
• **Russell, George
c/o Codeplay Software Limited
2nd Floor
Edinburgh, EH1 3HP (GB)**

• **Richards, Andrew
c/o Codeplay Software Ltd
2nd Floor
Edinburgh, EH1 3HP (GB)**

(74) Representative: **Cooper-Rolfe, Elizabeth Louise
Haseltine Lake LLP
Lincoln House, 5th Floor
300 High Holborn
London WC1V 7JH (GB)**

Remarks:
Amended claims in accordance with Rule 137(2)
EPC.

(54) **Dynamic code update**

(57) The present application describes techniques for making changes to the code of a computer program. In particular, the present application describes techniques for updating and/or replacing program code dynamically, i.e. whilst the program is executing.

The execution environment is operable to run programs in sequential time or work units called frames.

Component code is updated at a specified frame transition.

FIG. 1

EP 2 071 453 A1

## Description

The present invention relates to techniques for making changes to the code of a computer program. In particular, the present invention relates to techniques for updating and/or replacing program code dynamically, i.e. whilst the program is executing.

It is often necessary to make changes to an existing computer program following its release to end users, in order to fix problems or add new functionality to the program. For example, it is often desirable *inter alia:* to fix a bug, resolve compatibility problems, or amend algorithms, typically with a view to improving the usability and/or performance of a program.

For this purpose, it is known to employ a piece of software, commonly referred to as a "patch", which is operable, when executed, to make code modifications to an existing program or to replace an executable module. A patch file can be distributed to users of a program, e.g. via the internet, so that they may execute the patch file in order to perform the desired code update.

Currently known techniques for carrying out a code update procedure usually require that the execution of a program is stopped in order to perform the update. This can be very inconvenient for a user, particularly in the case of long-lived, and/or interactive (multi-user), applications, such as multi-player computer games or MMOGs, where it is necessary to shut down the program server, perform the desired update, and then restart the server. For the period of the update being performed, program clients cannot connect to the server in order to participate in program execution. Moreover, in order for the clients of a distributed system to receive updated code, it is typically necessary for the client machine to close the program, download the necessary update or patch file, and then restart the program using the updated code.

The reader will appreciate that it is common for a computer program to be divided up into a plurality of program components, e.g. program objects or computations, so that several components can be executed in parallel or so that one or more components can be executed in turn. A program component, such as a program object, can be considered to be a discrete item forming part of a computer program comprising data and procedures necessary to operate on that data.

One of the reasons that it is necessary for program execution to be halted in order to perform a code update is due to the interactions that take place between the different threads or components comprised in a computer program. Specifically, program components often require instructions from other components. As such, it is not usually possible, at any given time during program execution, to know which code sequences are not required by one or more components and, therefore, which may be safely updated. This problem is compounded in situations involving the distributed or parallel execution of a computer program, wherein the execution environment is distributed over a plurality of machines which interact with each other via a network (e.g. a local area network (LAN) or the internet). In these circumstances, program components will often be active in overlapping time periods, making it even more difficult to ascertain a safe time to perform a code update, e.g. a time at which the portion of code to be updated is not required by any other components.

Accordingly, it is desirable to be able to update code of a computer program in such a way as to minimise disruption to the execution of that program, preferably without having to halt the execution of that computer program. It is particularly desirable to be able to carry out code updates on a portion of a computer program which is being executed within an execution environment that is distributed between a plurality of machines.

According to the present invention there is provided a process for updating a computer program, wherein the process comprises: performing a code update procedure, during the execution of said computer program by an execution environment, in order to implement a code update for said computer program, the execution environment being operable to: i) allow communication between one said component and another said component in different frames of execution; and ii) to prevent communication between one said component and another said component in the same frame of execution, and wherein said code update procedure takes place at a frame transition between adjacent frames of execution.

Embodiments of the present invention are advantageous in that the code of a computer program can be updated dynamically, whilst the program is running. According to one embodiment, the execution environment, or runtime system, for the programming language may contain a compiler operable to translate the program text of an updated version of the running program, check the compatibility of the two versions of the program, and replace the code of the running program with that of the newly compiled program.

According to a preferred embodiment, the code update procedure causes the code for a program component of the running computer program to be updated from a first version to a second version. Preferably, the process of updating the code for a given program component from a first version to a second version has the effect of one or more of: the content of a code sequence of said program component being amended; the order of execution of code sequences of said program component being changed, an existing code sequence of said program component being deleted, a new code sequence of said program component being added.

Alternatively or additionally, according to a preferred embodiment, a code update procedure causes the introduction of code for a new program component. As will be explained in more detail below, the program component may comprise a monitor component, otherwise known as a shadow object or a watchdog thread.

According to a second aspect of the present invention, there is provided a system comprising an execution environment generation means configured to generate an execution environment operable to execute one or more components of a computer program in a plurality of sequential frames of execution, wherein the execution environment is further operable to: i) allow communication between one said component and another said component in different frames of execution; and ii) to prevent communication between one said component and another said component in the same frame of execution, the system further comprising code updating means operable to perform a code update procedure, at a frame transition between adjacent frames of execution, in order to implement a code update for a computer program being executed by said execution environment.

Reference is now made to United Kingdom Patent Application No. 0712496.9, the entire content of which is incorporated herein by way of reference thereto. A complete copy of GB 0712496.9 is filed with the present application. According to the teaching of GB 0712496.9 the execution of one or more components of a computer program is advantageously carried out in a plurality of sequential frames of execution, wherein the execution environment is further operable to: i) allow communication between one said component and another said component in different frames of execution; and ii) to prevent communication between one said component and another said component in the same frame of execution. Also according to the teaching of GB 0712496.9, it is advantageous for the execution environment to be operable such that the execution of one or more components of a computer program is carried out in a plurality of sequential frames of execution, the execution environment being further operable to process communications between components of the computer program in a predetermined order.

The internal structure of the execution environment described in GB 0712496.9 is very different to previously considered program execution techniques. Embodiments of the present invention seek to take advantage of the properties inherent in an execution environment according to the teaching of GB 0712496.9. In particular, according to embodiments of the present invention, it is desirable to implement a runtime system which is structured to facilitate the execution of program code in "frames", i.e. or units of time or work, with at least one component of the program comprised in each frame of execution. The division of a computer program into a series of frames, i.e. units of time or work, essentially bounds the progression of the program, or program component, execution over the time interval, throughout the execution environment (whether implemented on a single machine or across several machines) and, thus advantageously, enables synchronization of program execution so that the state of program components may be consistently defined. According to preferred embodiments of the present invention, program components will only change their visible state within a frame and are able only to read the values of other objects at the end of the previous frame.

A frame transition between adjacent frames therefore represents a point at which all components are essentially inactive, i.e. no computations are being executed by the execution environment. As such, the transition between adjacent frames of execution represents a point at which component execution is suspended and is therefore a "safe point" at which the state of all components comprised in the executing program remain constant. According to the embodiments of the present invention, the presence of regular safe points arising during execution provide opportunities at which changes to the program code can be conveniently made without having to halt program execution. In effect, the progressive execution of a computer program according to embodiments can be considered to consist iteratively of a) the execution of a set of computations or work units, potentially concurrently, followed by b) a safe period in which no units of work are executing, i.e. at a frame transition, during which time a subsequent set of work units are being scheduled to execute. This continues until either a specified number of iterations are made or no more work is available to be scheduled. It will be appreciated that embodiments of the present invention are further advantageous due to the fact that safe points will occur frequently during execution and, moreover, that they will occur naturally, without the need to architecture an application, or adapt a program, merely in order to allow a code update.

Embodiments of the first and second aspect of the present invention are particularly suitable for implementing code updates in a distributed system, which will typically comprise multiple representations of one or more of the components comprised in a given program. For example, in a distributed system comprising a plurality of machines in which the execution environment is distributed between them, and wherein several of the machines may be executing different representations of the same component(s) (e.g. corresponding objects), preferred embodiments of the present invention readily facilitate the update of all corresponding components within the system without disrupting the continued execution of the program. Thus, one of the main advantages offered by embodiments of the present invention is that, in the case of long-lived network applications, for example, massively multiplayer online games (MMOGs) and the like, the need to shutdown the server in order to perform the update is averted. Furthermore, it is not necessary, according to embodiments of the present invention, for client machines to disconnect from the program, download a code update, and then restart to the application. Rather, it is possible for a developer to alter the code for a running program, perform the update in the server and then transmit the update to currently connected clients and to all future clients (presumably at their time of connection) in order that the update can be implemented in a synchronised manner across the network. Preferably, the process of transmitting the update is transparent to the user(s).

It may also be advantageous, according to a particularly preferred embodiment, to minimise the amount of code transmitted in the form of a code update to the machines comprised in a distributed system. For example, according to a preferred embodiment, only changes to the existing code are transmitted. This can be computed by taking the difference of the two sets of code, the old code and the new code, as the representations of code are the same on client and server. Such an embodiment is advantageous in that the bandwidth consumption required to perform the update is reduced. This is particularly beneficial when updating large numbers of concurrent clients, and serves to increase the speed of the update process, thereby allowing for the rapid application of fixes or new program functionality.

According to embodiments of the present invention, the communication between components may include at least one of sending a message or reading at least a portion of the state of another component. The communication may take place between components of adjacent frames or between components of frames which are more than one frame apart. Dividing the program into sequential frames also advantageously allows for highly parallel execution of program components. Therefore, as the number of components in a program increases, execution of the program code can be readily distributed over multiple processors when a single processor is no longer sufficient. As such, different program components, or different objects, can be readily executed in parallel.

Preferably, messages can be sent from object to object or between the outside world (e.g. the user, or a C++ program) and an object. Messages allow communication between objects within the system and the outside world. They can be transmitted across a network. They are delivered to a particular frame number and target object. According to embodiments of the present invention which are operable to prevent communication between components in the same frame, if an object sends a message, then the message can only be received in a different, and subsequent, frame. Receipt of messages by an object may preferably be implemented by means of a queue of incoming messages provided for each object at each frame. The queue should preferably be ordered using a deterministic ordering method, so as to maintain network consistency.

A deterministic ordering method involves the entire set of messages received for a given object in a given frame being sorted on the basis of

    1) order of sending; and
    2) the identity of the sender.

Therefore, if an object sends two messages: A and then B, the recipient will receive A and then B in that order. Thus, the order of arrival is the same as the order of sending. If two objects (1) and (2) each send two messages A1 and B1, and A2 and B2 the recipient will receive them in the order A1 B1 and then A2 B2, so that order is preserved locally (in the messages from a single sender) and globally (messages from multiple senders are ordered by the identity of the sender). In the case of multiple senders, the act of sending may overlap e.g. objects (1) and (2) may execute concurrently. There is preferably an additional ordering on the identity given to a client, to allow user input messages to also be sorted e.g. if two clients send a user input message to the same object, the order is determined by the client identity.

The outside world within the context of the present invention is software written in other languages that do not follow a number of preferred conditions for writing a program to be executed within an execution environment of the proposed invention. The outside world does important work, for example, receiving information from the user, transmitting streams of data over the network, or displaying results back to the user. The outside world should preferably not violate preferred conditions of the system that will be discussed later. The outside world can send messages to objects within a system embodying the present invention, may keep references to objects within the system, create objects in the system, create sets of objects to duplicate or execute speculatively, or read the state of objects within the system. The outside world cannot modify the state of any object within the system, although it can be called via functions. However, in order to ensure such function calls do not introduce the potential for a divergence between the execution of corresponding objects on different machines, they should preferably return exactly the same result on every computer in the system whenever the parameters to the function are the same and the frame number the function is called on is the same. Such function calls should preferably not be able to modify the local state of the calling object.

Messages are also attached to, or associated with, a given frame of the computer program. Frames could be attached to a clock, so that a new frame is started every 1/50$^{th}$ of a second (for example) or, a new frame could start as soon as the last frame is finished or, frames could be executed in a pipeline with individual object execution starting whenever enough input data is available for the execution to complete.

The execution environments proposed in GB 0712496.9 are highly advantageous in that they facilitate the execution of a computer component with a high degree of determinism. This means that if corresponding components, e.g. objects (for example implementing a character in a game) in the same state execute the same code on two different computers, or at two different times, then the new state of the object will advantageously be identical on both machines or at both times.

Frames could also be hierarchical, wherein a universal frame clock is broken down into sub-frames.

This configuration would advantageously allow a set of program components to operate to a much faster frame counter for a particular algorithm that is distributed across multiple objects. It is envisaged that the coarsest granularity of frame would correspond to network frames, while the finest granularity of preferred frame would correspond to operations on the current processor. According to embodiments of the present invention, the state of a component is only visible at the start or end of a frame and, therefore the state is the same at the start of one frame as it was at the end of the previous frame. Thus, it will be appreciated that, according to embodiments of the present invention, the state of the system at the start of a frame is a function of only the state of the system at the end of the previous frame and any external messages into the system. The state of the system at a frame start consists of the state of all components at that frame start and any messages sent from the previous frame. Thus, in respect of a computer program comprising a plurality of components, it is possible to define a subset of all the components in the system. The subset may be a proper subset or, in the case where there is one component, a non-trivial subset. The state of the subset of the components in the system at a particular frame will be a function of the state of those components at the start of the previous frame, and all messages sent into the subset of the components from an earlier frame.

Formally, if $O_{n,i}$ is the state of component $i$ at the start of frame n, and $M_{n,i}$ is the list of messages sent from component $i$ from frame $n$ to frame $n+1$, and $f_{n,i}$ is the function that corresponds to the behaviour of object $i$ in frame $n$, then:

$$(O_{n+1,i}, M_{n+1,i}) = f_{n+1,i}( O_{n,i} M_{n,i} )$$

This is a function of frame $n$ that is returning the state of frame $n+1$. As can be seen, the entire state of frame $n+1$ is a function only of frame $n$. This means that there is no interdependency within frame $n$, so all objects in frame $n$ can advantageously be executed in parallel.

Preferably, each frame of each instance of an object comprises object data and an object execution point. At the start and end of every frame, the execution point will therefore be at a next-frame statement, except in the case of termination of computation, when the execution point will either be error or quit. The next frame statement is the last instruction to be executed in a frame. Preferably, in use, an execution environment embodying the present invention is operable to execute each frame up to and including the next frame statement. Thus, the object state is modified iteratively whenever the object's code is executed. However, according to preferred embodiments the iterative changes and intermediate states are never visible to any other objects and only the state at the end of a previous frame is visible to other objects.

A useful application of the code update techniques according to embodiments of the present invention arises in circumstances where it is desirable to provide a so-called watchdog thread, or monitor object, which serves to observe program execution, more particularly, to observe or monitor the changing state of an executing program.

Observations about the performance, e.g. correctness or efficiency of program execution may be readily made on the basis of knowledge about the status of an application before and after executing that application. It is also desirable, for several reasons, to be able to observe the changing state of a program execution environment in real time and, potentially, to conduct interactions with the executing program based on those observations. For this purpose, it is known to provide a so-called watchdog thread, object or routine, which is placed within an execution environment and operable to perform a regular checking function of the status of another thread, object or routine. A watchdog thread is typically able issue a notification in the event that a particular property or behaviour in the component being checked is observed. For example, it is known to provide a watchdog thread operable to watch a particular item of an executing program and, in the event of a crash or execution failure, to issue a notification which results in the watched item being restarted.

There is a particular desire to monitor component execution taking place in a distributed application, such as an MMOG where the internal state of the system is highly dynamic, rapidly changing in response to the actions and interactions of large numbers of player controlled actors and AI controlled characters and their environment. In these circumstances, it will be appreciated that portions of the state may be private to the server, shared or sharable between the server and one or more clients or private to a client. The ambition to observe, and potentially process, this state information arises in each of these situations.

Existing techniques for conducting inspections or observations on the state of distributed systems, such as an MMOG, typically involve downloading the state of the system, at a given instance in the execution of the program, into a database management systems (DBMS). The resultant data can then be replicated and queried offline with a view to identifying changes or improvements that could usefully be made to the system, for example in terms of the behaviour of components of that system, may be implemented subsequently.

In the context of a constantly evolving and interactive distributed system, it will be appreciated that existing techniques are unsatisfactory since any data queried offline via the DBMS will quickly be out of date or irrelevant. Moreover, the opportunity to make changes to the system is likely to be lost. Further, it requires considerable effort to convert the data from the original format into a useful queryable format.

It is desirable to improve and enhance the capabilities for monitoring the execution of components of a computer program. Particularly, but not exclusively, there is a need to facilitate real-time monitoring of the state of program components executing in distributed environment, particularly long-lived distributed online applications such as MMOGs, where program execution is distributed across a set of machines usually comprising a set of servers and clients.

According to a third aspect of the present invention there is provided an execution environment comprising a plurality of program components, wherein one said component of the program comprises a monitor component operable to execute independently of at least one other component of the program and to monitor (but preferably not alter) the state of said other component(s) during execution to derive monitor information, and wherein the monitor object is further operable based on said monitor information, to influence the behaviour of said other component(s) and/or the behaviour of program component(s) which interact with said other component.

Monitor component(s) may execute in parallel with other program components. Alternatively, or additionally, it is possible to interleave monitor components and program components for execution in series.

According to an embodiment of the third aspect, the execution environment is distributed between a plurality of machines. Preferably, the execution environment is operable such that the execution of the components of the computer program is carried out in a plurality of sequential frames of execution, wherein the execution environment is further operable to: i) allow communication between one said component and another said component in different frames of execution; and

ii) to prevent communication between one said component and another said component in the same frame of execution. An advantage of this embodiment is that there will exist a series of well defined safe points (i.e. at the transition between adjacent frames of execution) at which to execute a monitor component against the monitored component. In conventional execution techniques, it is hard to ensure the validity of the state being inspected (e.g. it may change during the monitor execution) and it is therefore difficult to schedule the execution of the monitor.

One of the important features of embodiments of the third aspect of the present invention is that the monitor component is operable to influence the behaviour of other program components, rather than to *control* the behaviour of the monitored component. Program components execute as independent computations modelling, for example, in-game agents. These agents determine their course of action from a combination of input and private, internal state, and pre-programmed behaviour. According to preferred embodiments of the present invention, although it is not possible to see or change the internal state of the agent, meaning that it is not possible to control the agent directly, input to the agent can be augmented, for example, to better inform it of the game world. An in-game agent can be written that takes account of all its received input in determining its course of action.

The monitor component may be operable to directly influence the behaviour of the component being monitored, or of other components in the system which interact with the component being monitored. Alternatively, in the case of a distributed system comprising at least one server machine, the monitor object may be operable to issue a request for a change in behaviour of the relevant component which is sent to the server. The server machine is able to response to this request accordingly and to implement the requested change in behaviour of the relevant components.

Embodiments of the first and second aspects of the present invention may be usefully employed to enable the creation of one or more monitor components to a computer program dynamically, i.e. whilst it is executing. For example, the code update may comprise a code sequence or code portion defining a monitor component which will be created during program execution. Preferable, the monitor component is operable to execute in parallel with at least one other component of the program and, when executed by the execution environment, to monitor the state of said other component(s) during execution to derive monitor information, and wherein the monitor object is further operable based on said monitor information, to influence the behaviour of said other component(s) and/or the behaviour of program component(s) which interact with said other component. Thus, it becomes possible to dynamically and safely add new computations composed of one ore more components which are not intended to be operable to simulate the virtual world created by the execution of a computer program, but which instead seek to monitor it. These components would effectively 'shadow' components of interest within the game world, and either report their findings or perform some corrective, or interactive, function via e.g. communication with the monitored component (message passing).

It will be appreciated that the monitor component(s) would be able to execute either 1) on the server 2) on both client and server.

Example uses of monitor components would include:

- Content monitoring for in game communications e.g. monitoring the content of in game text based chats for obscenity or abusive behaviour.
- Dynamic difficulty tuning. A monitor component can monitor individual player objects, make decisions regarding the apparent difficulty of the game for that player, and instruct in game objects to make the game easier or harder for that player.
- Cheat detection. A monitor component on the server could compare the observable behaviour of an object on the server against the client, to detect if the client has been hacked.
- Statistics gathering. Monitor components could be used to perform measurements and statistical analysis on the state of other objects. As an example, it could record the range of variations of a player's health over time.

- Logging from within the game. A monitor component could be used to monitor and report events within the game world. This could be used to track player progress within the game world, to determine the rate of progression within the game.

- Checking for and reporting on error conditions within the game. A monitor component can periodically test some invariant on an object or set of objects, and report violations to an error log.

- Watchdog style monitoring. A monitor component can be used to detect game objects that crash, and to restart them.

- An in game help / tutorial / advice system, to advise the player on what actions to perform in a given scenario

- Representing in game user interface elements (such as scoreboards on the client, or dashboards on the server) that are not part of the game world, but query parts of the game world or summarise such results)

- Representing a means by which out of game events (e.g. notifications of emails, or instant messaging (IM)) can be sent into the game by presenting the source of notifications as a shadow on the player

The monitor components are preferably constructed in the appropriate context, and given the identities of the objects to be monitored. They then advantageously execute in the same context as the objects being monitored and perform their function, either not interfering with the execution of the observed components, or doing so only via communications with that component e.g. through the mechanism of object passing.

Monitor components could be constructed on the game server, and replicated out to the client. Alternatively, they could be created on the individual client.

Monitor components allow for a better understanding of complex dynamic behaviour in large, long lived systems. Moreover, to understand the behaviour of some part of a system, it is possible to successively introduce and/or remove a sequence of shadows to observe and report on the part of interest.

According to preferred embodiments of the present invention, new behaviours and functionality can be added safely and dynamically to a running system, and can be executed at the most appropriate locations. Techniques that previously would have required a modification and restart of the client code or server code can advantageously be done dynamically in a running game.

It will be appreciated that within the context of an object orientated system, program components may comprise objects, i.e. a discrete item forming part of a computer program comprising data and procedures necessary to operate on that data. However, aspects or embodiments of the present invention are not restricted only to object oriented systems and, thus, a program component may be considered to comprise a program thread or a routine.

In any of the above embodiments or aspects, the various features may be implemented in hardware, or as software modules running on one or more processors. Features of one aspect or embodiment may be applied to any of the other aspects or embodiments.

The invention also provides a computer program or a computer program product for implementing the techniques described herein, and a computer readable storage medium having stored thereon a program for implementing the techniques described herein. A computer program embodying the present invention may be stored on a computer-readable medium, or it could, for example, be in the form of signal, such as a downloadable data signal provided from an internet website, or it could be in any other form.

For a better understanding of the present invention, and to show how the same may be carried into effect, reference will now be made, by way of example, to the accompanying drawings in which:

Figure 1 the steps comprised in a method of code update according to an embodiment of the present invention;

Figure 2 illustrates the execution cycle that takes place during the execution of a component according to an embodiment of the present invention;

Figures 3A and 3B show first, original, and second, updated, code sequences;

Figure 4 shows a detailed illustration of the execution sequence of a program component;

Figure 5 is a block diagram of a distributed computer system;

Figure 6 shows an object flow graph;

Figure 7 is diagram of program execution;

Figure 8 is a schematic view of two networked computers, one of which has a plurality of objects stored on it;

Figure 9 is another view of the computers of Figure 8, in which a subset of the objects ('a', 'b', 'c' and 'd') has been copied from the first computer onto the second computer;

Figure 10 is a view of the computers of Figure 9 in which messages ('x', 'y' and 'z') on the first computer are duplicated on the second computer;

Figure 11 shows the addition of another object ('e') to the second computer of Figure 9 and 10; and

Figure 12 shows messages being duplicated on the second computer of Figure 11.

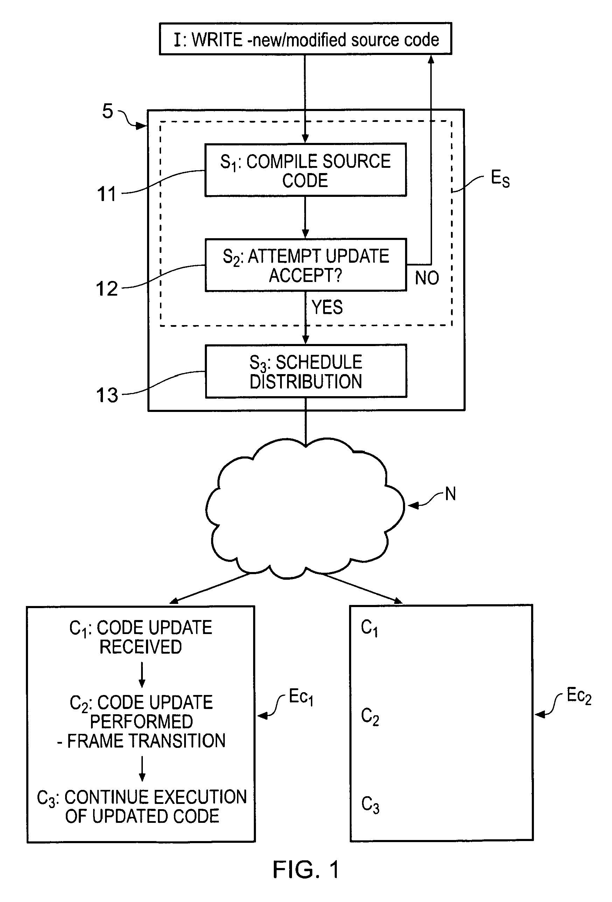

Figure 1 shows the steps comprised in a method of code update in a distributed system comprising a server apparatus S and two client apparatuses. The server and clients are executing a computer program in an execution environment comprising a server execution environment $E_s$ and two client execution environments $E_{c1}$ and $E_{c2}$, wherein the program execution environment as a whole may be considered to extend across each apparatus. The server and clients are operable to interact with each other via a network transport system N.

The execution environment is operable to: i) allow communication between one said component and another said component in different frames of execution; and ii) to prevent communication between one said component and another said component in the same frame of execution.

According to the present embodiment, at an initial step I, an operator alters a portion of the source code for the executing program, or writes a new code portion for inclusion in the existing program code, to thereby generate source code for a code update portion. In a first server step $S_1$, the code update portion is compiled in compiler 11. At a second server step $S_2$, a safety check is performed during which an attempt is made by a code updating means 12 (code updater), to incorporate the compiled code update portion into the existing program code being executed by the server execution environment $E_s$. Specifically, this attempt is performed at a transition between adjacent frames of execution when component execution is suspended and, thus, the state of all components comprised in the program remains constant.

In this embodiment, a safety check on the update is performed at the server. Thus, the server will either accept the update, or reject it as being unsafe to perform. If accepted, at a third server step $S_3$, the update will be scheduled by scheduler 13 for distribution to clients $C_1$ and $C_2$ at some specified time, for example after a user-specified delay. Finally, the code update portion will be transmitted to connected clients so that the update occurs in a synchronised manner across the network N. According to the present embodiment, updates are stored by each client machine until the time to apply them is reached. The timing of update on the client is specified relative to a frame identity (e.g. the program notion of time).

In a first client step $C_1$, a client receives the code update portion. In a second client step C2, the client is operable to perform a code update procedure at a specified frame transition, during which the code update is incorporated into existing program code and, if necessary, the previous version of that code portion is removed. At a third client step C3, program execution continues from the code statement following the frame transition.

Preferably, methods embodying the present invention will exhibit the following desirable properties:

1. The process should preferably be safe. Alterations to the program code that would be incompatible with the running programs state should preferably be prevented, in order to not allow changes to be made that cause the running program to crash or corrupt data.

2. It should preferably be possible in all cases to resume program execution after a code update. The code update should preferably not leave any game objects that cannot be executed after the code update is performed.

3. It should preferably be possible to identify a point at which it is safe to update the code e.g. there should be well defined points at which it is guaranteed to be possible to apply an update. Further, it should preferably not be possible for an unbounded amount of time to elapse before such a point is reached.

4. It should preferably be global to the entire distributed system. A code update must be pushed out to each of the clients participating in the distributed system, to ensure uniformity of code within the system,

According to the present embodiment, point one may be ensured by a set of rules enforced during the compilation of the update by compiler 11 in the server S. Updates that would break the rules are prevented from being applied. It will be appreciated that, in essence, embodiments of the present invention seek to change the code of a program, not the state of the running program components. Code changes that alter the interpretation of existing state are advantageously prevented, as it may be unsafe to allow existing data to be reinterpreted in another form.

Point two may be ensured, for example, by the code updating means being operable to perform the code update procedure only at specified points, which may be termed "yield points" or "yield statements", within a program. Within the context of the present invention, a yield may be considered to involve the suspension of a computation's execution, returning control to the execution environment (allowing it to perform code updates amongst other actions, such as scheduling), and then the resumption of computation's execution at the statement immediately following the yield point once the computation is once more scheduled to run by the execution environment. In other words, a yield point is both a point of 1) suspension of execution and 2) resumption of execution Thus, execution can be resumed following a code update procedure from the statement immediately following the yield. During a code update procedure according to the present embodiment, checks performed on the code update preferably ensure that yield points are not removed (additional yield points may be inserted) so there is a place to resume execution of each object.

Point three may be ensured as a consequence of the properties of the frame-based execution model. In the frame based execution model, there is a guaranteed point when no program threads are executing - i.e. the point of frame transition. This allows for the code update to be safely applied at the point of frame transition.

Point four is handled by sending messages to clients ahead of the time of update with the new code, and by bundling the update with the existing code when sending code to newly connecting clients - those that join once the update is scheduled, but before it is performed.

Finally, it will be appreciated that the ability to dynamically update running code does not mean that all updates should be applied in this manner. Updates that cannot be applied dynamically can be performed in the conventional manner, during the low usage times of the MMO in a schedule of maintenance.

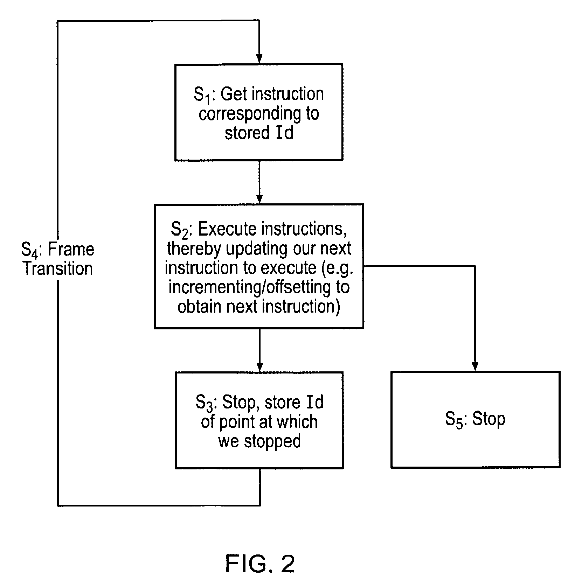

To aid the understanding of the present invention, Figure 2 illustrates a single execution cycle that takes place during the execution of a component according to an embodiment of the present invention. The execution cycle can be considered to comprise four distinct steps, three of which ($S_1$, $S_2$ and $S_3$) take place during the execution of a given frame of execution, plus a temporary suspension, $S_4$, which takes place at the frame transition.

According to preferred embodiments of the present invention, executing program components do not directly reference the code for their execution. Rather, a given program component comprises an identity look-up table which is used, during execution, to look up the appropriate code sequence (which will comprises one or more instructions).

Thus, referring again to Figure 2, in step $S_1$ the execution environment is operable to look up the code sequence which corresponds to the next stored identity (id). At step $S_2$, the one or more instructions of the code sequence corresponding to that stored id are executed until the next yield id is reached. Thus, it is possible to move from one instruction to the next (increment) or to another by offsetting (adding / subtracting) from the offset of the current instruction. Having obtained the next yield id, the execution sequence is effectively suspended for that component for the frame transition to take place $S_4$. Once all of the instructions for a given component have been executed, the execution cycle stops ($S_5$).

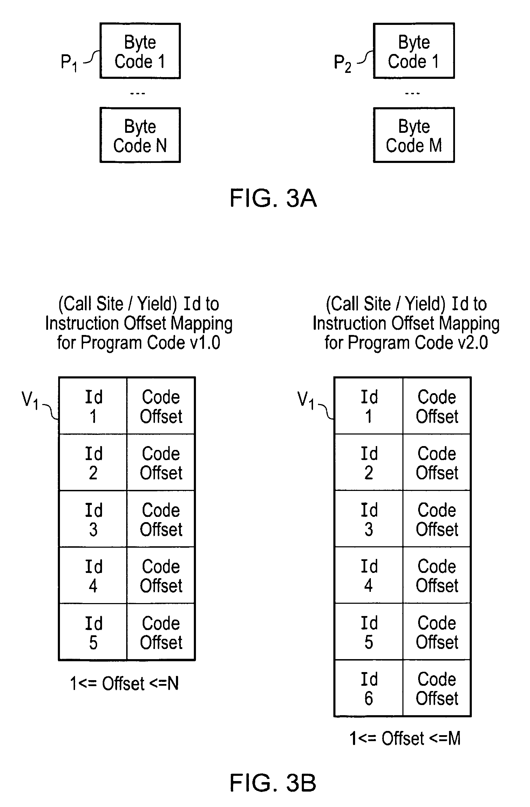

Figure 3A shows an example of a program code sequence $P_1$ and an updated version of that sequence $P_2$. Program sequence $P_1$ comprises a sequence of instructions 1... N, whilst sequence $P_2$ comprises a sequence of instructions 1... M. Thus, it will be appreciated that a code update procedure during which $P_1$ is updated to $P_2$ involves the inclusion of additional code. Figure 3B illustrates the way in which, according to a preferred embodiment a program component may be advantageously defined in terms of a look-up id table comprising a series of ids, each id corresponding to a sequence of code, or the start of a sequence of code, which can be obtained from the referenced offset of that code sequence within the bulk program code. In particular, Figure 3B illustrates the look-up id table for a first version of a code sequence $V_1$, and an updated version of that code sequence denoted $V_2$. It is apparent that code sequence $V_2$, which has been updated according to a code update procedure embodying the present invention, comprises an additional code sequence id. According to code update techniques of the present invention, during a code update procedure which takes place at a frame transition when no components are executing, the existing code and the existing lookup table are replaced. Execution is then resumed on the basis of a new id table to lookup instructions, which post update, come from the new code.

According to embodiments of the present invention, all ids in code sequence version $V_1$, are present in $V_2$, i.e. code sequence $V_2$ is a superset of ids. However, the offsets associated with ids in code sequence $V_1$ may be different to those associated with the ids in code sequence $V_2$.

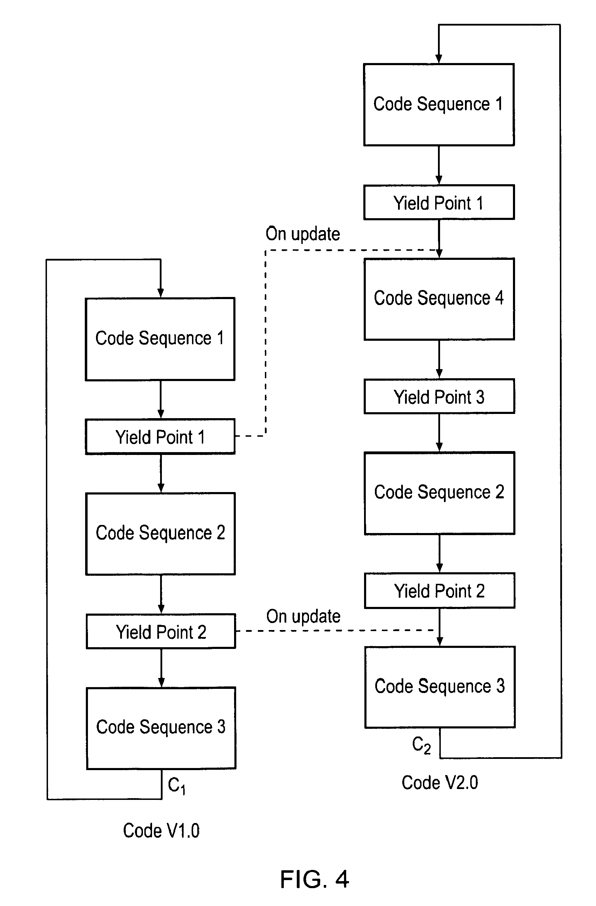

Figure 4 provides a more detailed illustration of the execution sequence of a program component, wherein during the execution sequence a code update procedure is performed to implement a code update of the program component code from component version one, $C_1$ to component version two, $C_2$. During the execution of component version $C_1$, the complete execution cycle comprises the execution of three code sequences and two yield points. The code update comprises a modified version of the program component, the modified version comprising four code sequences and three yield points. The modification of the program component code therefore involves the inclusion of an additional code sequence, namely code sequence 4, and additional yield point, namely yield point 3. Furthermore, the order/location of each code sequences within the execution sequence as a whole has been modified for version two. It will be appreciated also that the code sequences may differ in content between version 1 and version 2.

According to the present embodiment, a code updating means is provided which is operable to perform a code update procedure at a yield point of the execution cycle, each yield point coinciding with a frame transition between adjacent frames of execution. It will be appreciated that in a distributed system, multiple representations or instances of the program component will be executing and these are likely to be at different stages in the execution cycle. Thus, following receipt of a code update portion, program components may carry out a code update procedure to implement the code update at yield point 1 or at yield point 2. Following completion of the update procedure, the original code (version one) is no longer used and may be deleted or removed from the computer program.

For the sake of completeness, the following explanation provides further details concerning the operation and technical implementation of an execution environment according to embodiments of the present invention.

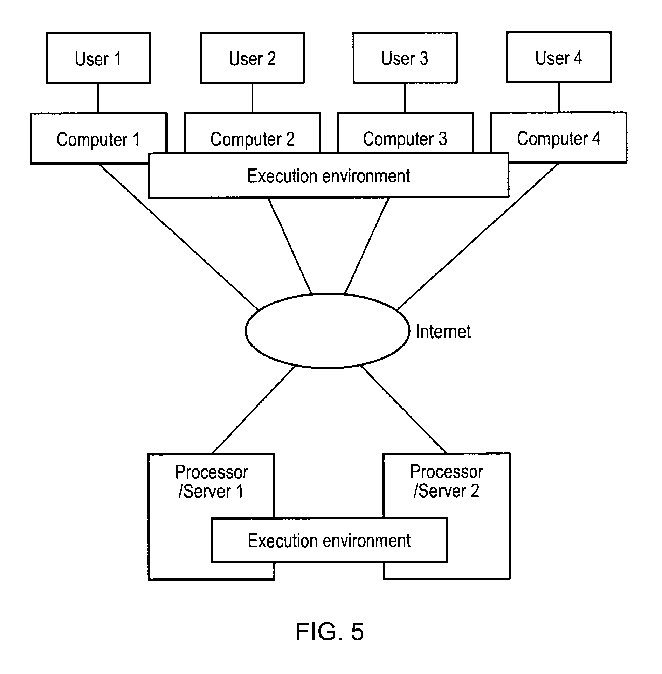

Figure 5 shows a computer system for allowing a plurality of users' computers 1-4 to interact with software that is distributed over a plurality of processors/servers. The system includes an execution environment, a network transport system, typically the internet, and an interface to external languages and systems (the "Outside World"). Whilst the execution environment is shown extending separately across the users' computers and the processors/servers, it will be appreciated that this is merely a diagrammatic representation and in practice, the execution environment exists across all of these. A compiler (not shown) is required on a development computer for developing the software and for writing code updates etc. The system provides a regular data access model (meaning access to all objects in the systems appears to the programmer to be the same). All data within the system is in the form of objects. A reference to an object can point to an object in any part of the distributed system. The pointer can even refer to an object that is duplicated across multiple machines in the system.

The compiler takes definitions of objects and compiles them into instructions for execution in the execution environment. The execution environment instructions available may include: arithmetic operations on integers and floating-point values (floating-point operations must be consistently defined on all systems); conditional operations on integer and floating-point values and other forms of data; operations to modify the state of the current object, but only visible to other objects in the next frame; creation of new objects of a specified type (only available on the next frame); take a reference to another object and read its state; destroy this object; send a message to another object (only received on the next frame); check for a message received and read its value and call a function defined by the external system (the function must not modify the system state for this frame).

The execution environment of the system shown in Figure 5 may be implemented as a virtual machine. The virtual machine maintains a set of frames. Each frame has a number. Within each frame are objects and messages. Messages are attached to two frames. They are sent from one frame and are received in the next. The virtual machine needs to have a system for storing frames, objects and messages. There will be at least one frame stored at a given time - the current consistent frame. During the execution of a frame, there will be at least two frames in the store - the current and next frame. Objects are read from the current frame, executed and then written to the next frame.

To ensure a high degree of determinism, queues of messages may be maintained, such that given a frame and a target object, it is possible to return a list of messages sent to that object. The execution environment is therefore operable to maintain these queues. Thus, a message sent from frame n will arrive in frame *n*+1. Therefore, separate queues should preferably be maintained for each object in each frame. To maintain consistent execution, the messages are sorted using a predefined sorting specification. It does not matter what the sorting specification is, as long as it is consistent throughout the network and results in an ordering of messages such that the determinism of the program is not compromised. Thus, if there are two messages A and B that are completely identical, the relative order of A and B is immaterial. If A and B can be in any way distinguished, the order is then (potentially) significant. Messages will be sent into the system attached to frame numbers. The system therefore stores these messages in the correct place.

Embodiments of the present invention preferably provide a system for identifying objects, such that given an object and a frame number, the execution environment can find the object within its store or in another location on the network. If the object is not within the store, but is available somewhere else on the network, the execution environment is operable to send a request for the object state over the network. The execution environment on the other system will be operable to receive the request and to send back the object state over the network. The execution environment may be adapted to destroy frames, objects and messages that are no longer in use. Generally, frames, objects and messages that are older than the consistent execution frame are no longer required. The system is also adapted to maintain sets of objects and to quickly determine which objects are inside the set, and which objects are outside. This is used for speculative execution and networking.

The Figure 5 system is operable to know when all object states and messages are available for a frame. If messages are being sent from another computer on the network, then there needs to be a system of identifying when all messages have arrived. Consistent execution for a frame does not start until all messages are available. The system also may need to be able to maintain one or more speculative execution frames. This is another frame that is ahead of the consistent execution frame. The speculative execution frame is produced by executing from the consistent execution frame to the speculative execution frame and ignoring any missing objects or messages that are not available. The system should keep all messages used up by this execution in their original frames. When an object destroys itself, all references to that object may be changed to a state that clearly defines a dead reference. This may be done when the objects destroys itself or at the time of use. It is not permitted to destroy objects that have no references to them. Such objects might still be active in the system.

The network transport system is operable to serialize objects and messages to a network packet or packets, depending on size and to perform the reverse procedure of de-serialising packets into objects and messages It is also able to receive objects and messages attached to individual frames and put them into the local store. It also implements a system of specifying sets of objects that are to be duplicated on other machines on the network. The sets and the machines that are duplicated across must be stored in a suitable data structure such as a list. It must then be possible to find all messages that cross over the set boundaries and send these to the machines that need them. Messages that come from objects on the local machine for a set of objects that are duplicated onto other machines on the network, must also be sent to the relevant machines. Once all messages from the local machine have been sent to objects for the current frame, a message must be sent to other machines to say they have received all messages from this system for this frame. This allows those other machines to stop waiting for messages for the current frame. Messages from the local system into the network programming system are assumed to be sent at the current speculative frame, not the current consistent network frame. *i.e*, messages sent from the user will only be allowed to be applied to the speculative state and queued until the consistent network state consumes them.

To deal with the situation of a machine on the network losing its connection, a time-out is enforced, so that if a machine has not sent in a complete frame worth of messages, then it is assumed by other machines that no messages will be sent for that frame from that machine. The machine will have to be sent a message saying that it must also assume that none of its messages for that frame will be allowed into the consistent network state. Sometimes it will be necessary to send the states of objects across the network repeatedly for every frame, so that other objects on the target computer can read the states of those objects, without having to execute those objects. This is because there may not be a boundary across which only messages are sent. There may be a continuous sequence of objects that read the state of their neighbours. The neighbouring objects are therefore sent repeatedly over the network, so that their states can be read by objects that are being read by the machines.

The interface to external languages and system is an API to link to an external network protocol, messaging system and function calling interface. The external system can: create new objects of a specified type (they will only be available on the next frame); send messages to objects; control when the next frame starts executing; create sets of objects to be duplicated across a network; speculatively execute up to the current frame; send in messages that have been received for previous frames across the network; signal when another machine has sent a message to say that no further messages will be received for a particular frame number; create function calls that can be called from the system (these must not alter the global state of the system in a way that can have an affect on the distributed system execution, otherwise network consistency will be lost - however - these calls can send information to the user, and read the state of objects). The external system cannot modify the state of objects.

Each object has a main procedure that is called after the object is created. The main procedure, for example, may contain "next frame" statements. An object can modify its own state. However, the modified state cannot be visible to other objects until the next frame starts, so the code will keep a local copy of the object. Only the local copy is modified by the object. This modified local copy is returned by the object at the end of the frame. The execution system will store this returned modified object in a data store provided for the frame, keeping the original object in the data store for the original frame. Therefore, during exaction of frame $n$, it is necessary to store frame $n-1$ and store the results of execution of each object into $n$. Frame $n$ will not be read until frame $n+1$ starts executing.

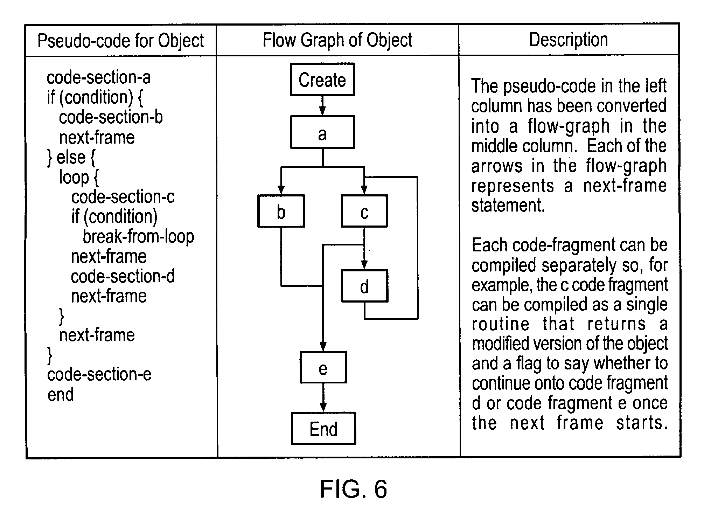

Figure 6 shows a flow diagram of the main procedure for each object. Here, a code fragment is defined as a section of code that: (1) starts with either the object creation or a single next-frame statement, *and* (2) every exit point on flow-graph is a next-frame statement or the object end, and (3) there are no next-frame statements within any code-fragment. Each code fragment is a function whose inputs are the state of all referenced objects in frame $n-1$ and all messages from frame $n-1$ to frame n, and whose return value is the state of the object in frame n and the messages from the object in frame n to frame $n+1$. Each of the code fragments may be separately compiled into an executable form, although other options are possible. The executable form for each code fragment contains a single entry point, returns a modified version of the object and returns a reference to the code fragment to continue onto once the next frame starts. The executable code fragment cannot modify any data visible to other objects until the next frame starts. In order that data, such as the values of local variables, is preserved from one frame to the next, a stack frame can be created on a heap to store the values of local variables.

Execution is split up into frames. For each frame, the system runs through all the objects in the system and executes each one. It is entirely possible to execute the objects out of order or in parallel. Each object has a state that includes an amount of data for the object and an execution point. When an object is created, the execution point is at the start of the object's main procedure. When execution of the object's main procedure reaches a next-frame statement, then execution of that object stops for this frame. At the end of the frame, the new object state is stored. During execution of an object's code, messages may be created. These must be queued up and attached to a target object. Messages can only be read by the target object on the next frame. The messages may also need to be transmitted over a network as described below. Also, an object might read in messages. The messages are read in a deterministic order. This is to allow out-of-order and parallel execution on multiple systems. The order can be defined by the system and is not described here. At the end of the frame all unused messages can be discarded. All modified objects are modified and the frame number is increased by 1. Execution can continue onto the next frame.

Before executing the code of an object it is necessary to know that (for this frame) all potential messages from any object in the system (i.e. across the entire network), or the state of other objects that this object refers to must be available. If not, it might be desirable to execute speculatively. In this case the object and its frame number must be stored and then the execution can continue without all of the information required. However, the object is marked as speculative and it will be necessary to revisit this object and re-execute it correctly once all of the required information has arrived.

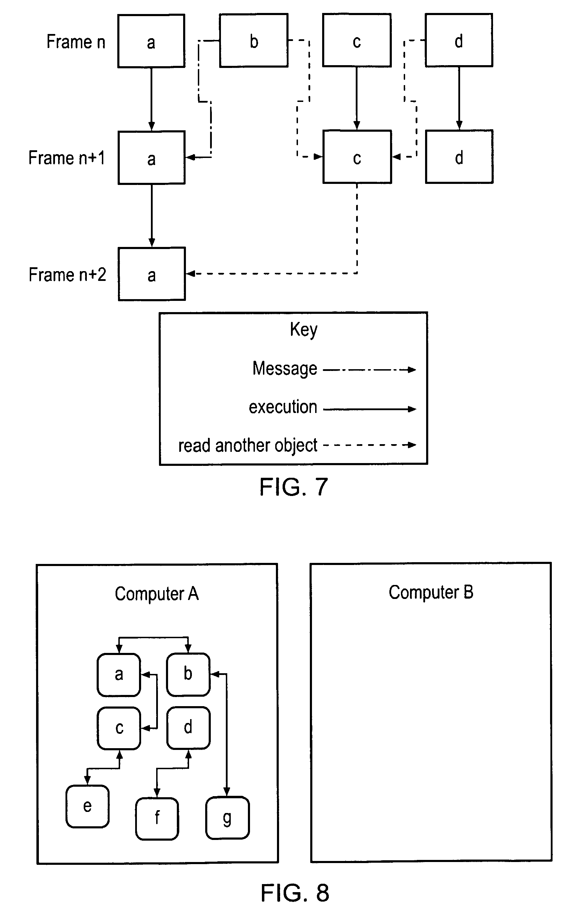

Figure 7 shows execution of a system with four objects labelled *a* to *d.* The state in frame *n* is known and execution of frame *n* has produced a message from *b* to *a.* In frame *n+1*, object *c* reads data from objects *b* and *d.* In frame *n+2*, object *a* reads data from object *c.* From Figure 7, it can be seen that there are no dependencies between objects in the same frame. Message dependencies only exist from one frame to the next, while read dependencies only exist from the current frame to the previous frame. This is what allows the system to be executed in parallel and over a network. The diagram shows a partial execution in which a is calculated up to frame *n+1* and *b* is ignored. This is to illustrate that it is possible to execute beyond the current consistent network state to calculate a speculative state (which will be based on a mixture of real input data and guessed input data). However, if it is later discovered that *b* in frame *n+1* sends a message to a then, the execution of a in frame *n+1* is potentially false and may need to be re-calculated.

The code for each object for each frame can be considered as a function of the value of all the referenced objects in the previous frame and all the messages received by the object. Therefore, if the objects in frame *n* and the messages from frame *n* to frame *n+1* are consistent throughout the system, then the state of all objects in frame *n+1* and the messages from frame *n+1* to frame *n+2* are just a function of data that is consistent throughout the system. Therefore, the objects will stay consistent as long as the initial state and initial messages are consistent and the functions are executed consistently. In order to achieve determinism, the initial state of objects and the initial messages are consistently transferred throughout the system. Also, the execution of the functions is consistent. So, all operations defined by the language and executed by a local virtual machine must have a consistently defined behaviour. Floating-point operations give a consistent result. All data values are initialized. It is not be possible to reference objects that have been destroyed. Action in response to destroyed objects is consistent. It is possible to try to reference a destroyed object, but this should always result in a failure. The error handling of the language executes in a consistent manner, and it is not possible for a program on one machine to react differently to the program on another computer in response to the same failure.

An object can be duplicated across a network. This means that for a given frame number, the object on one machine on the network will have exactly the same state as an object on another machine. This is a preferred objective of the system, because it allows multiple users on different computers to view and modify the same global state. For example, this allows large numbers of players of a computer game to play in the same game world and interact. Each player is an object that is created on the player's client machine and duplicated onto the other player's machine and (almost certainly) onto a game server. The game world is duplicated across all players' machines. If the world is too large for all players to interact in, then subsets of the game world can be duplicated onto player machines. This method relies on the fact that given the state of an object in frame n, it is possible to calculate the state of the object in frame *n+1* consistently across the network.

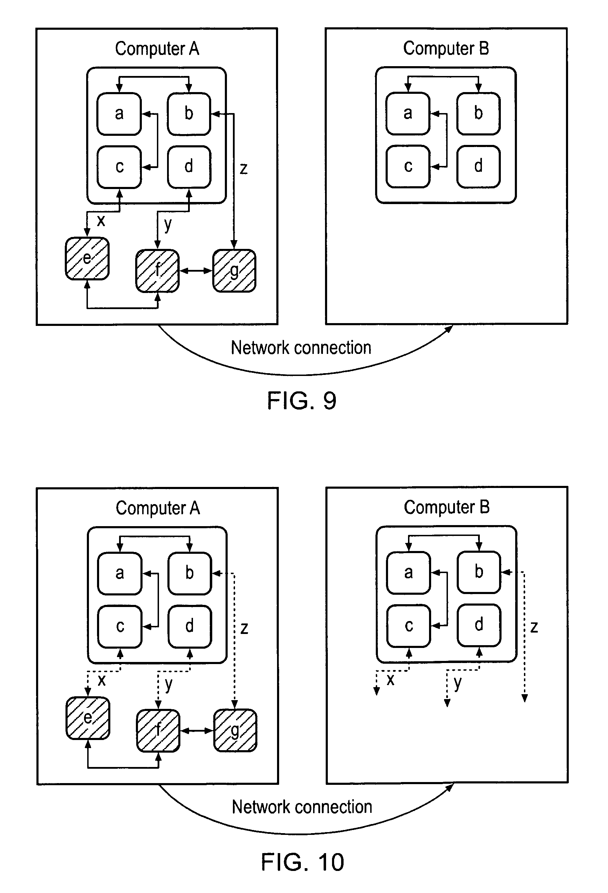

Figures 8-10 illustrate a technique for duplicating objects across a plurality of computers. Here, 4 of the objects on Computer A, which has a set of 7 objects a to g, are going to be duplicated on Computer B, which has no objects on it. There are messages being sent between objects, which are shown as black arrows between the objects. To duplicate objects, firstly the desired objects, typically a subset of objects, is selected. In this example, objects a, b, c and d. are chosen. Then a specific duplication frame number to start from is chosen. The duplicate frame number is the number of the frame from which the duplication starts. It will be necessary to store a duplication frame number for each set of objects that are duplicated. The objects will exist in-sync from the duplication frame number onwards. This means that in any given frame number (after the duplication frame number) the states of the objects will be the same on both computers.

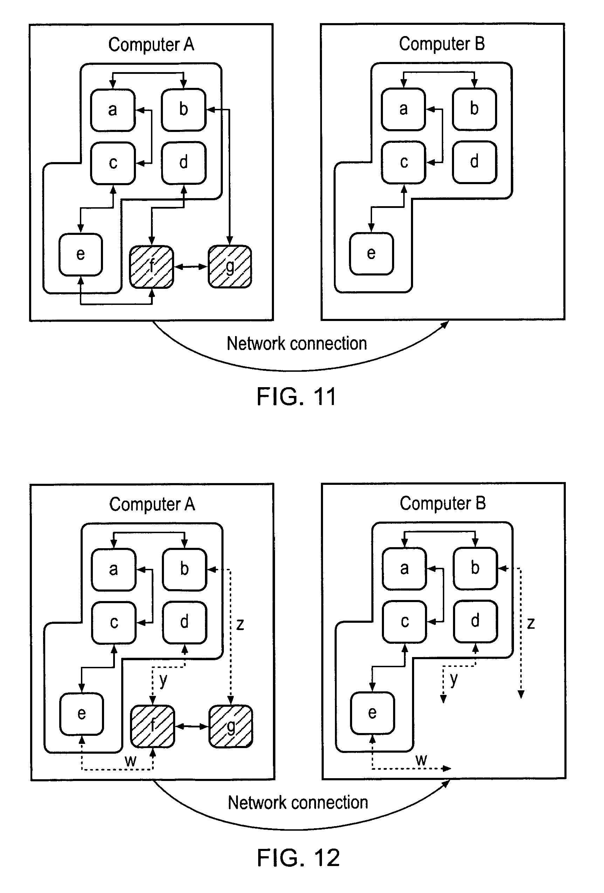

The states of the selected objects are sent at the duplication frame number to Computer B over the network, as shown in Figure 1. Computer A and Computer B can now continue from the duplication frame number and stay synchronized. Computer A and Computer B must remember the set of objects that have been duplicated for as long as they exist duplicated on Computer B. For every subsequent frame, Computer A and Computer B must find every message that crosses the subset boundary. These messages are shown in Figure 11. Messages that are entirely outside or entirely inside the subset boundary do not need to be transmitted across the network. In this example, messages x, y and z must be transmitted across the network. It is only necessary to transmit messages going from outside the subset into the subset. On Computer B, messages leaving the subset to objects not on Computer B can be discarded.

Because it is possible for an object a to read the state of object e without sending or receiving messages, it may sometimes be necessary to transmit the state of entire objects across the network. This is likely to be inefficient. Therefore, an optimal system will choose subsets of objects to duplicate across a network such that there is the minimum quantity of object access and message passing across the subset boundary. This can be achieved dynamically by adding and removing objects from the duplicated set as required.

If the system decides that object e should be added to the duplicate subset, then the subset is expanded to include object e and object e is transmitted across the network, as shown in Figure 12. After object e has been added to the subset, then any messages between e and other members of the subset do not have to be transmitted across the network. However, messages between e and objects that are not members of the subset do now need to be transmitted across the network, as shown in Figure 12. The same system can be used to duplicate objects on Computer B onto Computer A.

When running software across a network there is a delay (or 'latency') between a change occurring on one machine in the network and that being communicated to all the other machines in the network. To maintain instant interactivity with the user, it is sometimes necessary to execute beyond the currently known network state. However, it is important that this instant reaction is corrected from the real network state later and does not create divergence between the different machines in the network. In accordance with the present invention, this is achieved by maintaining two states. One state is the definite network state and the other is a speculative current state. If the definite network state is at frame n, and the user is inputting data at frame n+m, then calculating the speculative current state is achieved by queuing up all the messages into the system from frames n to frame n+m, copying the speculative current state into a temporary store and running temporary stored state for m frames using the queued messages. The queued messages must be kept until the definite network state can be moved forward by one frame. Once the definite network state has consumed the messages, then the messages can be discarded. This system provides a general-purpose speculative execution system to deal with network latency. Existing systems for dealing with network latency usually require prediction software to be written specifically for each type of object in the system. So normally a programmer would have to think about how to implement speculative prediction in a network system, or just have a lot of latency in the user interaction. In contrast, the invention of the present application means the programmer does not have to do anything special to handle network latency.

To implement the speculative prediction method, the following components are preferable: a frame counter for the definite network state (because it must be known that all messages for the definite network state frame have been received from all machines in the system before the definite network state can be moved forward by one frame); a queue of messages that have been received since the definite network state - this will consist of messages received from the local system and any messages received from the network; a system for copying the definite network state into a temporary store that will be the speculative current state; the ability to execute the temporary store until there are no more messages available; the ability to execute objects speculatively, so that if the value of an object is not available then it is guessed, and the assumption that if no message is available then none was sent, and the ability to use the speculative current state for display to the user. This requires a memory means to maintain several different frames in memory. The definite network state must always be stored in memory.

Having illustrated and described the invention in several embodiments and examples, it should be apparent that the invention can be modified, embodied, elaborated or applied in various ways without departing from the principles of the invention. The invention can be implemented in software programs and data structures stored on portable storage media, transmitted by digital communications, or other transmission medium, or stored in a computer memory. Such programs and data structures can be executed on a computer, to perform methods embodying the invention, and to operate as a machine, or part of apparatus, having the capabilities described herein.

## Claims

1. A process for updating the code of a computer program, wherein the process comprises:

performing a code update procedure, during the execution of said computer program by an execution environment, in order to implement a code update for said computer program, the execution environment being operable to: i) allow communication between one said component and another said component in different frames of execution; and ii) to prevent communication between one said component and another said component in the same frame of execution, and wherein said code update procedure takes place at a frame transition between adjacent frames of execution.

2. A process as claimed in claim 1, wherein said code update procedure causes the code for a program component of said computer program to be updated from a first version to a second version.

3. A process as claimed in claim 2, wherein updating the code for said program component from the first version to the second version has the effect of one or more of:

the content of a code sequence of said program component being amended; the order of execution of code sequences of said program component being changed, an existing code sequence of said program component being deleted, or a new code sequence of said program component being added.

**4.** A process as claimed in any preceding claim, wherein said code update procedure causes the introduction of code for a new program component.

**5.** A process as claimed in claim 4, wherein said new program component comprises a monitor component.

**6.** A process as claimed in any preceding claim, wherein said execution environment is distributed between a server execution environment of a server machine and at least one client execution environment of a client machine, wherein corresponding representations of said computer program are being executed by each of the server execution environment and the client execution environment, the code update being for each representation of said computer program, wherein the process further comprises:

- at the server machine, performing one said code update procedure in order to update the code of the representation of the computer program being executed by the server execution environment;
- sending information about said code update to each client machine;
- at each client machine, and following receipt of said information about said code update, performing one said code update procedure in order to update the code of the representation of the computer program being executed by said client machine.

**7.** A process as claimed in claim 6, further comprising the step of performing a safety check on the code update at the server machine, wherein said code update is only sent to said client machine(s), if it is determined by that the code update is safe to perform.

**8.** A process as claimed in claim 6 or 7, further comprising at the server, the step of determining the changes that the code update will make to the program code with respect to the version of the computer program currently being executed, wherein the step of sending information about said code update to each client machine comprises sending said changes to said client machine(s).

**9.** A process as claimed in any preceding claim, wherein the execution environment is operable to only allow communication between components in different frames of execution.

**10.** A process as claimed in any preceding claim, wherein communication includes at least one of sending a message to another component or reading data from another component.

**11.** A process as claimed in any preceding claim, wherein communications are processed in a pre-determined order.

**12.** A process as claimed in any preceding claim, wherein said update procedure is performed at a yield point arising during the execution a program component to be updated.

**13.** A system comprising an execution environment generation means configured to generate an execution environment operable to execute one or more components of a computer program in a plurality of sequential frames of execution, wherein the execution environment is further operable to: i) allow communication between one said component and another said component in different frames of execution; and ii) to prevent communication between one said component and another said component in the same frame of execution,
the system further comprising code updating means operable to perform a code update procedure, at a frame transition between adjacent frames of execution, in order to implement a code update for a computer program being executed by said execution environment.

**14.** A system as claimed in claim 13, comprising a plurality of machines which interact with each other via a network, wherein the execution environment is distributed between said plurality of machines.

**15.** A system as claimed in claim 13 or 14, further comprising a compiler operable to compile an input program text to generate said code update.

**16.** A system as claimed in claim 15, wherein said compiler is further operable to perform the code update procedure in order to implement said code update for said computer program.

**15.** A computer readable storage medium having stored thereon a computer program which, when run on one or more computers, causes the computers to perform the process as claimed in any one of claims 1 to 12.

**16.** A computer readable storage medium having stored thereon a computer program which, when run on one or more computers, causes the computers to generate the system as claimed in 13 or 14.

**17.** A computer program as clamed in any one of claims 14, 15 or 16, carried by a carrier medium.

**18.** A computer program as claimed in claim 17, wherein said carrier medium is a recording medium.

**19.** A computer program as claimed in claim 17, wherein said carrier medium is a transmission medium.

**Amended claims in accordance with Rule 137(2) EPC.**

**13.** A system comprising an execution environment generation means configured to generate an execution environment operable to execute one or more components of a computer program in a plurality of sequential frames of execution, wherein the execution environment is further operable to: i) allow communication between one said component and another said component in different frames of execution; and ii) to prevent communication between one said component and another said component in the same frame of execution, the system further comprising code updating means operable to perform a code update procedure, at a frame transition between adjacent frames of execution, in order to implement a code update for a computer program being executed by said execution environment.

**14.** A system as claimed in claim 13, comprising a plurality of machines which interact with each other via a network, wherein the execution environment is distributed between said plurality of machines.

**15.** A system as claimed in claim 13 or 14, further comprising a compiler operable to compile an input program text to generate said code update.

**16.** A system as claimed in claim 15, wherein said compiler is further operable to perform the code update procedure in order to implement said code update for said computer program.

**17.** A computer readable storage medium having stored thereon a computer program which, when run on one or more computers, causes the computers to perform the process as claimed in any one of claims 1 to 12.

**18.** A computer readable storage medium having stored thereon a computer program which, when run on one or more computers, causes the computers to generate the system as claimed in any one of claims 13 to 16.

**19.** A computer program as clamed in any one of claims 17 or 18, carried by a carrier medium.

**20.** A computer program as claimed in claim 19, wherein said carrier medium is a recording medium.

**21.** A computer program as claimed in claim 19, wherein said carrier medium is a transmission medium.

```
I: WRITE -new/modified source code
```

5

$S_1$: COMPILE SOURCE CODE

11

$E_S$

$S_2$: ATTEMPT UPDATE ACCEPT?

12

NO

YES

$S_3$: SCHEDULE DISTRIBUTION

13

N

$C_1$: CODE UPDATE RECEIVED

$C_2$: CODE UPDATE PERFORMED - FRAME TRANSITION

$C_3$: CONTINUE EXECUTION OF UPDATED CODE

$Ec_1$

$C_1$

$C_2$

$C_3$

$Ec_2$

FIG. 1

FIG. 2

P$_1$ ⌐ | Byte Code 1 |

...

| Byte Code N |

P$_2$ ⌐ | Byte Code 1 |

...

| Byte Code M |

## FIG. 3A

(Call Site / Yield) Id to
Instruction Offset Mapping
for Program Code v1.0

V$_1$ ⌐

| Id 1 | Code Offset |
|---|---|
| Id 2 | Code Offset |
| Id 3 | Code Offset |
| Id 4 | Code Offset |
| Id 5 | Code Offset |

1<= Offset <=N

(Call Site / Yield) Id to
Instruction Offset Mapping
for Program Code v2.0

V$_1$ ⌐

| Id 1 | Code Offset |
|---|---|
| Id 2 | Code Offset |
| Id 3 | Code Offset |
| Id 4 | Code Offset |
| Id 5 | Code Offset |
| Id 6 | Code Offset |

1<= Offset <=M

## FIG. 3B

FIG. 4

FIG. 5

| Pseudo-code for Object | Flow Graph of Object | Description |
|---|---|---|
| code-section-a<br>if (condition) {<br>  code-section-b<br>  next-frame<br>} else {<br>  loop {<br>    code-section-c<br>    if (condition)<br>      break-from-loop<br>    next-frame<br>    code-section-d<br>    next-frame<br>  }<br>  next-frame<br>}<br>code-section-e<br>end | Create → a → (b, c) → d → e → End | The pseudo-code in the left column has been converted into a flow-graph in the middle column. Each of the arrows in the flow-graph represents a next-frame statement.<br><br>Each code-fragment can be compiled separately so, for example, the c code fragment can be compiled as a single routine that returns a modified version of the object and a flag to say whether to continue onto code fragment d or code fragment e once the next frame starts. |

FIG. 6

EP 2 071 453 A1

Frame n

Frame n+1

Frame n+2

Key

Message — · — · — ·→

execution ————→

read another object - - - - - - →

## FIG. 7

Computer A

Computer B

## FIG. 8

FIG. 9

FIG. 10

FIG. 11

FIG. 12

## EUROPEAN SEARCH REPORT

| | European Patent Office | | Application Number EP 07 12 3229 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2007/085855 A (CODEPLAY SOFTWARE LTD [GB]; RICHARDS ANDREW [GB]; COOK ANDREW [GB]; RI) 2 August 2007 (2007-08-02) * abstract * * page 2, line 1 - page 3, line 26 * * page 6, line 34 - page 7, line 1 * * the whole document * * page 10, line 31 - page 11, line 18; figures 5,6 * * page 12, lines 17-26 * | 1-19 | INV. G06F9/445 |
| Y | US 4 954 941 A (REDMAN BRIAN E [US]) 4 September 1990 (1990-09-04) * abstract * * column 1, lines 40-45 * * column 1, line 65 - column 245 * * column 4, lines 20-35 * * column 5, lines 1-35 * | 1-19 | |
| Y | US 2004/210890 A1 (ARMSTRONG WILLIAM J [US] ET AL) 21 October 2004 (2004-10-21) * abstract * * claims 1,5-7 * * paragraphs [0011] - [0015], [0023], [0024] * | 1-19 | TECHNICAL FIELDS SEARCHED (IPC) G06F |
| A | KACSUK P: "Systematic macrostep debugging of message passing parallel programs" FUTURE GENERATIONS COMPUTER SYSTEMS, ELSEVIER SCIENCE PUBLISHERS. AMSTERDAM, NL, vol. 16, no. 6, 1 April 2000 (2000-04-01), pages 609-624, XP004197220 ISSN: 0167-739X * page 613, line 29 * * page 614, lines 2,3 * * page 614, lines 8-13 * | 1-19 | |

-/--

The present search report has been drawn up for all claims

| Place of search | Date of completion of the search | Examiner |
|---|---|---|
| The Hague | 11 July 2008 | Dieben, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

**European Patent Office**

Application Number

EP 07 12 3229

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SKILLICORN D B ET AL: "Models and languages for parallel computation" ACM COMPUTING SURVEYS, ACM, NEW YORK, NY, US, US, vol. 30, no. 2, 1 June 1998 (1998-06-01), pages 123-169, XP002454722 ISSN: 0360-0300 * page 149, lines 15-23; figure 4 * ----- | 1-19 | |

TECHNICAL FIELDS SEARCHED (IPC)

The present search report has been drawn up for all claims

| Place of search | Date of completion of the search | Examiner |
|---|---|---|
| The Hague | 11 July 2008 | Dieben, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 12 3229

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2008

| Patent document cited in search report | | Publication date | Patent family member(s) | Publication date |
|---|---|---|---|---|
| WO 2007085855 | A | 02-08-2007 | NONE | |
| US 4954941 | A | 04-09-1990 | NONE | |
| US 2004210890 | A1 | 21-10-2004 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 0712496 A